# EUROPÄISCHE PATENTSCHRIFT

(11) **EP 2 448 256 B1**
(45) Veröffentlichungstag und Bekanntmachung des Hinweises auf die Patenterteilung: **18.07.2018**
(21) Anmeldenummer: 11185858.5
(22) Anmeldetag: 20.10.2011
(51) Int. Cl.: H04N 5/64, A47B 43/00, B62B 3/04, E04B 2/74, B65D 6/18, A47F 5/10

(54) **Zusammenklappbarer Modulkörper sowie aus dem Modulkörper gebildete Wand**
Collapsible module body and wall made of the module body
Corps modulaire repliable ainsi que paroi formée à partir d'un corps modulaire

(30) Priorität: 27.10.2010 DE 202010014817 U; 26.01.2011 DE 102011009788; 23.03.2011 DE 202011004333 U
(43) Veröffentlichungstag der Anmeldung: 02.05.2012
(73) Patentinhaber: PeTa Bearbeitungstechnik GmbH, 63801 Kleinostheim (DE)
(72) Erfinder: Taupp, Peter, 63801 Kleinostheim (DE)
(74) Vertreter: Baumann, Rüdiger Walter

(56) Entgegenhaltungen:
- EP-A1- 1 609 725
- EP-A2- 0 252 017
- WO-A2-2006/060303
- DE-A1- 2 212 559
- DE-A1- 3 200 216
- DE-U1- 29 914 390
- DE-U1-202009 005 189
- FR-A- 1 551 540
- US-A- 4 214 669
- US-A1- 2003 052 158
- US-A1- 2006 016 807

## Beschreibung

Die Erfindung betrifft einen zusammenklappbaren Modulkörper sowie eine aus dem Modulkörper gebildete Wand.

Für den Aufbau von Videowänden oder sonstigen größeren Präsentationsflächen sind Strebenkonstruktionen bekannt. Deren Aufbau gestaltet sich jedoch besonders zeitaufwendig und bedarf einer Vielzahl von Hilfsmitteln, wie zum Beispiel Kranen, Leitern oder dergleichen, um sämtliche Elemente zu verbinden. Ist eine derartige Wand konzipiert, besteht nur selten die Möglichkeit, hier nachträglich oder während des Aufbaus Änderungen in der Wandkonfiguration durchzuführen, da nicht selten eine auf die speziellen Anforderungen zugeschnittene Wand konstruiert und aus individuellen Einzelteilen gebildet wird.

Aufgabe der vorliegenden Erfindung ist es daher, eine Vorrichtung zur Verfügung zu stellen, das den einfachen und schnellen Aufbau einer Präsentationsfläche ermöglicht und zum anderen kostengünstig hergestellt werden kann.

Diese Aufgabe wird gelöst durch den wie eingangs benannten zusammenklappbaren Modulkörper nach Anspruch 1 sowie die aus dem Modulkörper gebildete Wand nach Anspruch 9. Aus dem Stand der Technik, beispielsweise der EP 0 252 017, EP 1 609 725, FR 1.551.540 und US 2003/0052158 sind klappbare Kisten bekannt, die sich jedoch nicht für die Anordnung von Präsentationsmitteln eignen. Aus der DE 22 12 559, der DE 32 00 216, der DE 2 99 14 390, der US 2006/016807 und der US 4,214,669 sind zusammenklappbare Container bekannt, die sich jedoch ebenfalls nicht für die Anordnung von Präsentationsmitteln eignen.

Der erfindungsgemäße Modulkörper eignet sich insbesondere für die Anordnung von Präsentationsmitteln. Der Modulkörper umfasst dabei eine erste und eine zweite, zur ersten parallel angeordnete als durchgehende Fläche ausgebildete Hauptfläche, die die Ober- und Unterseite des Modulkörpers bilden. Die beiden Hauptflächen sind durch wenigstens eine klappbare Seitenfläche verbunden. Darüber hinaus ist am Modulkörper wenigstens eine, an einer der Hauptflächen angeschlossene, verschwenkbare Seitenfläche vorgesehen. Im zusammengeklappten Zustand sind die Seitenflächen im Wesentlichen parallel und in einem aufgerichteten Zustand des Modulkörpers im Wesentlichen senkrecht zu den Hauptflächen ausrichtbar. Aufgrund der zusammenklappbaren Ausführung des Modulkörpers kann dieser zum einen besonders platzsparend und einfach transportiert werden. Die klappbare Ausführung ermöglicht es zum anderen, dass ohne Einsatz weiteren Zubehörs der Modulkörper am Verwendungsort aufgeklappt werden kann, um hier umgehend zur Verfügung zu stehen. Der Modulkörper weist dabei bevorzugt eine definierte Größe auf, die auf die beispielsweise am Modulkörper anzuordnenden Präsentationsmittel abgestimmt ist. Diese Uniformität des Modulkörpers ermöglicht es, mehrere Modulkörper problemlos zu einer größenvariablen, mobilen Wand zu verbinden. Es werden hierzu standardisierte Module verwendet, um unterschiedliche, frei wähl- und konfigurierbare Wandkonfigurationen zu erstellen.

Die klappbare Ausführung der Seitenflächen und die schwenkbare Anordnung einer weiteren Seitenfläche vereinfacht den Aufbau und garantiert eine ausreichende Stabilität des gesamten Modulkörpers.

Die klappbare Seitenfläche ist dabei bevorzugt aus über ein Scharnier verbundenen Teilflächen gebildet. Das Scharnier erstreckt sich dabei über die gesamte Länge der Seitenfläche. Alternativ können auch mehrere kurze Scharnierabschnitte über die gesamte Seitenkante der Teilfläche angeordnet werden, um die klappbare Ausgestaltung der Seitenfläche zu gewährleisten. Erfindungsgemäß weisen die Seitenflächen bildenden Teilflächen randseitige Abkantungen auf. Die Abkantungen an aneinanderliegenden Seiten der Teilflächen weisen dabei insbesondere einen von 90 ° abweichenden Winkel auf. Hierdurch wird eine ungehinderte Bewegbarkeit der Teilflächen während des Aufklappvorganges gewährleistet.

Auch die Seitenflächen weisen günstiger Weise randseitige Abkantungen auf. Hierbei wird es als insbesondere vorteilhaft angesehen, wenn die Abkantungen an der ersten Seitenfläche zumindest abschnittsweise Hinterschneidungen zum Eingriff mit den Abkantungen an einer zweiten Seitenfläche aufweisen. Dies führt im aufgerichteten Zustand des Modulkörpers dazu, dass die Seitenflächen miteinander verrasten und die gesamte Modulkonstruktion zusätzlich stabilisieren. Ein unbeabsichtigtes Lösen der Seitenflächen wird somit wirkungsvoll verhindert. Zum anderen kann über den Eingriff der Seitenflächen der auf dem Modulkörper auflastende Druck an weiteren Punkten abgeleitet werden.

Als günstig wird des Weiteren angesehen, wenn an den Abkantungen einer ersten Seitenfläche Rastnasen vorgesehen sind, die die Abkantungen an der zweiten Seitenfläche übergreifen und die Verbindung zwischen den Seitenflächen weiter verbessern.

Alternativ oder zusätzlich dienen in den Abkantungen an der ersten Seitenfläche insbesondere schlitzförmig ausgebildete Ausnehmungen, die Vorsprünge, die an den Abkantungen an der zweiten Seitenfläche vorgesehen sind, aufnehmen zur Verbesserung der Verbindung zwischen den Seitenflächen und damit zur Stabilisierung des gesamten Modulkörpers.

Nach Aufrichten des Modulkörpers ist vorgesehen, dass die verschwenkbaren Seitenflächen mit einer der Hauptflächen verbunden werden. Hierbei wird es als günstig angesehen, wenn an den Seitenflächen oder der Hauptfläche Rastmittel vorgesehen sind, die ein Festlegen der Seitenfläche an oder in der Hauptfläche ermöglichen. Derartige Rastmittel sind insbesondere als federbeaufschlagter Riegel, als Raste, als Klinke, als Schnellspanner oder als lösbare Verschraubung ausgebildet. Während der federbeaufschlagte Riegel, die Raste oder die Klinke selbsttätig mit den zu verbindenden Flächen verrasten, ist beim Schnellspanner beziehungsweise der lösbaren Verschraubung oder vergleichbaren Rastmitteln ein Eingriff des Bedieners notwendig, der diese anbringt.

Um das Gewicht des Modulkörpers zu reduzieren, aber dennoch eine ausreichende Stabilität zu gewährleisten, ist vorgesehen, dass die Haupt- und/oder die Seitenflächen rahmenartig ausgebildet sind. Daneben besteht selbstverständlich auch die Möglichkeit, dass hier rahmenartige Durchbrechungen zum Innern des Modulkörpers hin vorgesehen sind, die zum einen die Stabilität des Modulkörpers nicht beeinträchtigen, dessen Gewicht jedoch wesentlich reduzieren.

Aus dem erfindungsgemäßen Modulkörper ist eine Wand bildbar, an der Präsentationsmittel angeordnet werden können. Um die statische Stabilität der Wand, auch bei mehreren, übereinander angeordneten Modulkörpern zu gewährleisten, ist vorgesehen, dass an der Hauptfläche und/oder den Seitenflächen ein Sockel oder Stützvorsprung beziehungsweise eine Sockelleiste anordenbar ist. Dieser Sockel beziehungsweise Stützvorsprung oder die Sockelleiste erstreckt sich senkecht von der Hauptfläche oder den Seitenflächen weg und ist parallel zu einer Stand- oder Auflagefläche des Modulkörpers angeordnet. Durch die Sockelleiste beziehungsweise den Sockel oder Stützvorsprung wird ein Kippen des Modulkörpers, auch bei der Anordnung schwerer Präsentationsmittel oder dergleichen wirkungsvoll verhindert und die Stabilität der Gesamtkonstruktion so insgesamt erhöht. Der Sockel beziehungsweise Stützvorsprung oder die Sockelleiste kann als zusätzliches Modul zur Verfügung gestellt werden und in die in den Hauptflächen des Modulkörpers vorgesehenen Bohrungen oder Anordnungspunkte eingehängt, eingeschraubt oder in sonstiger Art und Weise eingebracht werden, um mit dem Modulkörper verbunden zu werden. Erfindungsgemäß ist an den Hauptflächen eine sich senkrecht zur Hauptfläche erstreckende, umlaufende Abkantung oder Bördelung vorgesehen. Diese Abkantung oder Bördelung bildet im aufgerichteten Zustand des Modulkörpers die Stand- oder Auflagefläche für den Modulkörper. Des Weiteren sind in der Abkantung oder Bördelung Aufnahmen, insbesondere Bohrungen oder Innengewinde vorgesehen. Die Abkantung oder Bördelung übergreift auch die Seitenflächen beziehungsweise dient als Auflagekante für die verschwenkbaren Seitenflächen, wenn der Modulkörper aufgerichtet ist.

Eine als günstig angesehene Ausführungsform des Modulkörpers sieht vor, dass, um die Standfestigkeit des Modulkörpers zu erhöhen, wenigstens eine, die Hauptflächen verbindende Stützleiste oder Schiene vorgesehen ist. Die Hauptflächen weisen dabei Aufnahmen, Bohrungen oder Innengewinde auf, beispielsweise in der Abkantung oder Bördelung, über die die Stützleiste oder Schiene lösbar angebracht werden kann. Die Stützleiste oder Schiene überragt die Hauptfläche wenigstens in eine Richtung und verhindert somit wirkungsvoll ein Kippen des aufgerichteten Modulkörpers. Insgesamt wird somit die Stabilität des Modulkörpers sowie einer daraus gebildeten Wand oder dergleichen verbessert.

Um die Stabilität des Modulkörpers zu erhöhen und um auch bei ungleichmäßigen Standflächen die Standsicherheit des Modulkörpers zu gewährleisten, ist vorgesehen, dass in oder an den Haupt- oder Seitenflächen und/oder der Abkantung oder Bördelung und/oder in der Stützleiste beziehungsweise Stützschiene eine Justiervorrichtung für den Modulkörper vorgesehen ist. Eine derartige Justiervorrichtung kann beispielsweise als längenverstellbare Schraube oder höhenverstellbarer Stand- oder Stützfuß ausgebildet werden. Die Schraube beziehungsweise der Stand- oder Stützfuß wird in eine in den Abkantungen oder Bördelungen und/oder den Haupt- oder Seitenflächen beziehungsweise der Stützleiste oder Stützschiene angeordnete Bohrung oder ein Innengewinde eingeschraubt. Über die Einschraubtiefe kann dann die auflage- oder standflächenparallele Ausrichtung des Modulkörpers eingestellt werden.

Um die Ausrichtung des Modulkörpers zu überprüfen, wird es als günstig angesehen, wenn in oder an den Haupt- oder Seitenflächen, den Abkantungen, Bördelungen und/oder in der Stützleiste oder Stützschiene wenigstens eine Libelle, insbesondere eine Dosenlibelle angeordnet ist. Selbstverständlich besteht hier die Möglichkeit, dass jeweils eine Libelle für die vertikale und horizontale Ausrichtung des Modulkörpers vorgesehen wird.

Um auf unterschiedliche Bauhöhen des Modulkörpers beziehungsweise unterschiedliche Ausrichtungen reagieren zu können, ist bevorzugt vorgesehen, dass die Stützleiste oder Stützschiene längenverstellbar, insbesondere als Teleskopschiene ausgebildet ist, um jeweils eine angemessene Stabilität und Standfestigkeit zu gewährleisten. In den Abkantungen und/oder Bördelungen ist wenigstens eine Aufnahme für ein Verbindungsmittel zum Ausbilden einer Verbindung von zwei oder mehr Modulkörpern vorgesehen. Dieses Verbindungsmittel dient dabei zur Ausbildung einer Schraub- oder Steckverbindung zwischen zwei oder mehr Modulkörpern. Die Aufnahme selbst ist bevorzugt als Bohrung oder Innengewinde ausgebildet, wobei es als günstig angesehen wird, wenn das Verbindungsmittel als Steckstift oder als schraub- und/oder verstellbarer Stift ausgebildet ist. Der Steckstift beziehungsweise der schraub- oder verstellbare Stift wird dann in die Bohrung beziehungsweise die Aufnahme eingeschraubt oder eingesteckt und bildet einen Bolzen, der mit einer entsprechenden Aufnahme an dem anzubindenden Modulkörper in Eingriff bringbar ist, um die Modulkörper dadurch soweit zu verbinden, dass ein Verrutschen oder Verkippen der über- oder nebeneinanderstehenden Modulkörper wirkungsvoll unterbunden wird. Um die Modulkörper in geeigneter Weise beabstanden zu können, beispielsweise wenn die Anordnung von Präsentationsmitteln mit unterschiedlicher Flächengröße vorgesehen ist, ist das Verbindungsmittel bevorzugt als schraub- beziehungsweise verstellbarer Stift ausgebildet, wobei dieser Stift dann bevorzugt einen auf den Haupt- oder Seitenflächen beziehungsweise Abkantungen oder Bördelungen aufliegenden Kragen aufweist und in die Haupt- oder Seitenfläche beziehungsweise Abkantung oder Bördelung eingeschraubt werden kann.

### Die Vorgehensweise sieht dabei wie folgt aus:

Der Stift wird zunächst teilweise in die Aufnahme an einem ersten Modulkörper eingeschraubt und der zweite Modulkörper dann auf den ersten Modulkörper aufgesetzt. Der Stift wird dabei mit einer Ausnehmung im zweiten Modulkörper in Eingriff gebracht. Der zweite Modulkörper beziehungsweise dessen Abkantung oder Bördelung liegt auf dem am Steckstift beziehungsweise schraub- oder verstellbaren Stift vorgesehenen Kragen auf. Durch weiteres Einschrauben bzw. Lösen des Stiftes aus der Aufnahme im ersten Modulkörper kann der Abstand zwischen den Modulkörpern feinjustiert werden. Dadurch, dass der Stift in den zweiten Modulkörper einsteht, wird hier eine stabile und sichere Verbindung zwischen den Modulkörpern gebildet, die einstellbar bleibt.

Der Modulkörper ist günstigerweise so ausgebildet, dass eine horizontale oder vertikale Ausrichtung der Hauptflächen möglich ist. Hierdurch besteht die Möglichkeit, dass der Modulkörper im Portrait oder im Landscape-Format aufgestellt werden kann. Durch geeignete Anordnung mehrerer Modulkörper können hier verschiedene Konfigurationen ausgebildet werden. Die Modulkörper oder Boxen können beispielsweise 2 x 2, 3 x 3, als Rechteck, als Quader, als Podest, Tordurchgang oder ähnliches aufgestellt werden. Da in allen Seiten der Haupt- oder Seitenfläche Aufnahmen für die Verbindungsmittel vorgesehen sind, kann eine sichere Verbindung zwischen den Modulkörpern in sämtlichen Ausrichtungsvarianten erreicht werden. Die Anordnung der Aufnahmen ist dabei entsprechend abgestimmt.

Eine als günstig angesehene Ausführungsform des Modulkörpers sieht vor, dass zwischen den Hauptflächen verlaufende und/oder an den die Hauptflächen verbindenden Seitenflächen angeordnete Schienen vorgesehen sind. Diese Schienen dienen zum Einschub von Fächern, Laden, Geräte- beziehungsweise Einschubracks, bspw. 19"-Racks oder dergleichen. Es wird die Möglichkeit geschaffen, den Innenraum des Modulkörpers zu nutzen, beispielsweise als Lager- oder Vorratsraum, als Aufnahme für technische Geräte, zur Aufnahme von Lautsprechern, Soundsystemen oder sonstiger Veranstaltungstechnik.

Der Modulkörpers weist erfindungsgemäß in den Hauptflächen Ausnehmungen zum Einhängen von an den Präsentationsmitteln angeordneten Vorsprüngen oder Halterungen auf. Desgleichen besteht die Möglichkeit, dass die Ausnehmungen zum Durchstecken von mit den Präsentationsmitteln in Eingriff bringbaren Schrauben oder dergleichen vorgesehen sind. Die Präsentationsmittel, beispielsweise Displays oder dergleichen, werden somit an der Vorderseite des Modulkörpers angebracht und von hinten beispielsweise mit einem Klemmhebelschrauber befestigt. Dieser wird durch Ausnehmungen in den Hauptflächen hindurchgeführt und in die Rückwände des Präsentationsmittels eingeschraubt. Die Ausnehmungen können auch als Lang-, Kreuz- oder Schlüsselloch ausgebildet sein. Insbesondere die Ausbildung als Kreuz- oder Schlüsselloch ermöglicht es, in einfacher Art und Weise das Präsentationsmittel im Modulkörper einzuhängen und sicher mit diesem zu verbinden, wobei je nach Ausbildung der Ausnehmung die letztendliche Ausrichtung des Modulkörpers, das heißt Portrait- oder Landscapeausrichtung berücksichtigt werden kann.

Um weitere Anordnungsmöglichkeiten für die Präsentationsmittel zu schaffen, wird es als günstig angesehen, wenn die Ausnehmungen in einer der Hauptfläche drehbar gelagerten Hülse oder Scheibe angeordnet ist. Hierdurch wird dann die größtmögliche Variabilität bei der Anordnung erreicht, da die Ausnehmung aufgrund der drehbaren Lagerung genau auf die an dem Präsentationsmittel vorgesehene Vorsprünge oder Halterungen abgestimmt werden kann.

Es wird als vorteilhaft angesehen, wenn der gesamte Modulkörper oder zumindest die Haupt- beziehungsweise Seitenflächen ganz oder teilweise aus Metall, insbesondere aus Stahl oder Aluminium gebildet sind. Eine gewichtsreduzierte Ausführungsform sieht vor, dass Haupt- beziehungsweise Seitenflächen ganz oder teilweise aus Kunststoff bestehen. Hierbei können zusätzlich tragende Teile aus Metall ausgebildet werden, eine Füllung der Haupt- oder Seitenflächen erfolgt dann mit Kunststoffplatten oder dergleichen. Eine besonders stabile und dabei leichte Ausführungsform des Modulkörpers sieht die Verwendung von faserverstärktem Kunststoff, GFK oder CFK oder sonstigen geeigneten Verbundmaterialien vor. Daneben besteht selbstverständlich auch die Möglichkeit, dass der Modulkörper aus Holz oder Holzwerkstoffen gebildet ist und gegebenenfalls entsprechende Versteifungen oder Verstärkungen aus Metall, Kunststoff, faserverstärktem Kunststoff, GFK oder CFK aufweist.

Der Modulkörper dient zur Anordnung von Präsentationsmitteln. Bei diesen Präsentationsmitteln handelt es sich bevorzugt um Flachbildschirme, Touchscreens, LCD- oder Plasmabildschirme, LED-Flächen oder sonstige Displays. Verwendet werden kann der Modulkörper beziehungsweise eine Kombination mehrerer Modulkörper auch, um eine Projektions- oder Präsentationsfläche zu bilden, auf die dann Bilder, beispielsweise mittels Beamer oder dergleichen projiziert werden. Selbstverständlich kann die Präsentationsfläche auch zur Anordnung von Plakaten oder dergleichen dienen.

Insgesamt ermöglicht der zusammenklappbare Modulkörper in einfacher Art und Weise den Aufbau von insbesondere großflächigen Präsentationswänden. Der Modulkörper hat den Vorteil, dass aufgrund der zusammenklappbaren Ausführung der Transport und die Lagerung der einzelnen Modulkörper wesentlich erleichtert wird. Des Weiteren kann eine problemloser Aufbau ohne Verwendung zusätzlicher Werkzeuge durchgeführt werden. Die variable Kombination der Modulkörper ermöglicht es, verschiedenste Konfigurationen von Präsentationswänden zu bilden. Aufgrund der Konfiguration der Hauptflächen kann eine Vielzahl von Präsentationsmitteln mit unterschiedlichem Format angeordnet werden. Die Anordnungspunkte beziehungsweise deren Ausbildung stellt sicher, dass hier auf unterschiedliche Größen des Präsentationsmittels reagiert werden kann.

Ein Transportwagen, der keinen Teil der Erfindung bildet, für wenigstens einen zusammenklappbaren Modulkörper weist beispielsweise eine Auflagefläche für den Modulkörper auf. Diese Auflagefläche verfügt vorteilhafter Weise über Bohrungen, in die an den Hauptflächen der Modulkörper anordenbare oder in diese eingeformte Vorsprünge, Stifte oder Bolzen, bspw. Hutmuttern eingesetzt werden können. Hierüber kann eine stabile Verbindung zwischen Transportwagen und Modulkörper ausgebildet werden. Der Transportwagen kann dabei auch aus lediglich mit Transportrollen versehenen Schienen gebildet werden, die an die Hauptfläche des Modulkörpers angebracht werden. Der Modulkörper selbst bildet dann im Zusammenspiel mit den Schienen die Auflagefläche zur Anordnung weiterer Modulkörper und zu deren vereinfachtem Transport.

Die Auflagefläche weist günstiger Weise Bohrungen auf, die mit in den Hauptflächen der Modulkörper vorgesehenen Bohrungen fluchten. Durch diese kann ein Stütz- oder Sicherungsstab bzw. eine Schiene hindurchgeführt werden. Dies hat den Vorteil, dass mehrere Modulkörper übereinander angeordnet werden können, wobei aufgrund des eingeführten Sicherungsstabes oder der -schiene ein Verkippen des Modulkörperstapels wirkungsvoll verhindert wird.

Eine weitere Ausführungsform des Transportwagens sieht vor, dass am Transportwagen beziehungsweise der Auflagefläche Zurrpunkte für einen Spann- oder Sicherungsgurt vorgesehen sind. Daneben besteht die Möglichkeit, dass am Transportwagen weitere Rollen angeordnet werden, um die Handhabbarkeit des Transportwagens weiter zu verbessern.

Die Erfindung umfasst auch eine Wand aus lösbar verbundenen, zusammenklappbaren Modulkörpern. Es handelt sich hierbei um eine Wand, die aus den wie zuvor beschriebenen Modulkörpern gebildet ist. Die Modulkörper weisen hierzu in seitlichen Abkantungen oder Bördelungen der Hauptflächen vorgesehene Steck-, Schraub- oder Rastmittel auf und werden lösbar fest über diese Steck-, Schraub- oder Rastmittel zur Wand gemäss der Erfindung verbunden.

Als günstig wird in diesem Zusammenhang angesehen, wenn die Modulkörper unterschiedliche Flächengrößen oder Volumina aufweisen, so dass hier bezüglich der Wandgröße beziehungsweise der Anordnung der Wandelemente eine Variationsmöglichkeit besteht und somit mehrere Wandkonfigurationen realisiert werden können. In diesem Zusammenhang wird es als günstig angesehen, wenn die Modulkörper wahlweise mit horizontal oder vertikal angeordneter Hauptfläche zusammengestellt werden und hierüber eine zusätzliche Variabilität bei der Ausbildung der Wand gegeben ist. Selbstverständlich besteht die Möglichkeit, dass in der Wand Modulkörper mit horizontaler neben Modulkörpern mit vertikaler Ausrichtung vorgesehen sind.

Die Wand ist günstigerweise als Bogen, Portal, Podest, Band, Tunnel, Turm, Sockel, Rechteck, Quader oder dergleichen ausbildbar. So besteht beispielsweise die Möglichkeit, dass die Modulkörper derart verbunden werden, dass sich hierbei ein Podest ausbildet, das beispielsweise als Siegerpodest verwendet werden kann. Gleichzeitig stellt die Wand aufgrund der Ausbildung der Modulkörper die Möglichkeit zur Anordnung von Präsentationsmitteln zur Verfügung, so dass auf dem Podest Informationen wiedergegeben werden können. Wird beispielsweise die Wand als Siegerpodest ausgebildet, so können auf den an den Modulkörpern angeordneten Präsentationsmitteln weitere Informationen oder Werbung wiedergegeben werden. Insbesondere für Messen ist es von besonderer Bedeutung, wenn die Wand als Band, Tunnel, Turm oder Portal ausgebildet ist. Es kann somit auf einfache Art und Weise eine vielgestaltige Werbefläche zur Verfügung gestellt werden und die Präsentationsmittel dabei in ein bestehendes Standlayout eingebunden werden.

Die Wand zeichnet sich insbesondere dadurch aus, dass wenigstens an einer Stand- oder Auflagefläche der Wand beziehungsweise der die Stand- oder Auflagefläche der diese bildenden Modulkörper ein Stützsockel oder eine Stützblende beziehungsweise eine Leiste lösbar angeordnet ist. Hierüber kann, auch bei mehreren übereinander angeordneten Modulkörpern eine ausreichende Standsicherheit der gesamten Wand gewährleistet werden, ohne hier zusätzliche Stabilisierungs- oder Befestigungsmittel vorsehen zu müssen, die die Wand gegen ein Umkippen sichern.

Gleichfalls zur Stabilisierung der Wand beziehungsweise der einzelnen Modulkörpern dient eine insbesondere längen- oder höhenverstellbare, an den Stand- oder Auflageflächen angeordnete Leiste. Auch hierüber wird ein Verkippen der Wand verhindert. Gleichzeitig besteht die Möglichkeit, dass die Leiste Justiermittel zur Verfügung stellt, um eine nachträgliche Ausrichtung der Wand beziehungsweise der einzelnen Modulkörper durchführen zu können.

Die Wand verfügt zudem über geeignete Stellmittel, um den Abstand zwischen den einzelnen Modulkörpern einzustellen. Insbesondere von Vorteil ist es, hierbei eine Stellschraube zu verwenden, die es ermöglicht, den Abstand zwischen den Modulkörpern besonders fein einzustellen. Hierüber kann dann bspw. auf unterschiedliche Flächengrößen oder Spaltmaße der an den Modulen angeordneten Präsentationsmittel reagiert werden. Dies begünstigt auch die Verwendung von Modulkörpern gleicher Größe. Über die Einstellbarkeit besteht die Möglichkeit, diese mit verschiedenen Präsentationsmitteln beziehungsweise Größen von Präsentationsmitteln zu verwenden oder an diese anzupassen.

An der Wand sind bevorzugt Präsentationsmittel angeordnet. Diese können an den die Wand bildenden Modulkörpern eingehängt oder angeschraubt oder in sonstiger Art und Weise angebracht werden. Bei den Präsentationsmitteln handelt es sich insbesondere um Bildschirme, Touchscreens, LCD oder Plasmabildschirme. Daneben besteht auch die Möglichkeit, dass an den Modulkörpern beziehungsweise der Wand LED-Flächen angeordnet sind. Als weitere Verwendungsmöglichkeit der Wand wird angesehen, wenn diese eine Projektions- oder Präsentationsfläche zur Verfügung stellt. An der Wand können auch Kombinationen der unterschiedlichsten Präsentationsmittel angebracht werden. Als in diesem Zusammenhang vorteilhaft wird angesehen, wenn die Präsentationsmittel an beiden Seiten der Modulkörper angeordnet werden können. Hierzu weist sowohl die erste wie auch die zweite Hauptfläche des Modulkörpers eine entsprechende Konfiguration mit Aufnahmen auf.

Es besteht alternativ auch die Möglichkeit, dass von der Rückseite der Wand her zugängliche Einschübe oder Laden in den Modulkörpern vorgesehen sind. Die Modulkörper dienen dann beispielsweise zur Aufnahme von Steuerungstechnik für die Präsentationsmittel. Daneben kann in den Modulkörpern eine Tonanlage angeordnet werden. Die kompakte Bauart und der große von den Modulkörpern überspannte Raum bietet ausreichend Platz für die Aufnahme von Geräten etc.

Die Wand zeichnet sich bevorzugt dadurch aus, dass eine rückseitige Verschraubung oder Einhängung der Präsentationsmittel in die Modulkörper vorgesehen ist. Dies gestaltet sich derart, dass in den Modulkörpern beziehungsweise deren Hauptflächen Ausnehmungen, Bohrungen oder Laschen vorgesehen sind, in die die Präsentationsmittel eingehängt oder eingeschraubt werden können. Aufgrund der Ausführung der Modulkörper ist hier ein ungehinderter Zugang an die Präsentationsmittel von der Rückseite her möglich, so dass eine Verschraubung beziehungsweise sonstige Befestigung der Präsentationsmittel in einfacher Art und Weise möglich ist. Auch beim Austausch einzelner Präsentationsmittel bietet die erfindungsgemäße Wand entscheidende Vorteile, da sie einen ungehinderten Zugang zu den Präsentationsmitteln gewährt.

Der zwischen den Hauptflächen der aufgerichteten Modulkörper, die die Wand bilden, aufgespannte Raum dient bevorzugt als Aufnahme- oder Lagerraum, insbesondere für Steuer- und Versorgungsvorrichtungen für die Präsentationsmittel oder Tonanlagen. Als günstig wird in diesem Zusammenhang angesehen, wenn die Modulkörper Schienen oder Leisten aufweisen, in die die Steuer- und Versorgungsvorrichtungen, Tonanlagen oder dergleichen eingeschoben oder eingesetzt werden können. Dies kann beispielsweise in Form eines sogenannten 19" Racks erfolgen. Die genormten beziehungsweise standardisierten Einschübe oder Leisten ermöglichen die Verwendung mit einer Vielzahl verschiedenster Elemente, ohne einen zusätzlichen Anpassungsaufwand.

In den Zeichnungen ist die Erfindung in verschiedenen Ausführungsbeispielen schematisch dargestellt. Es zeigen:

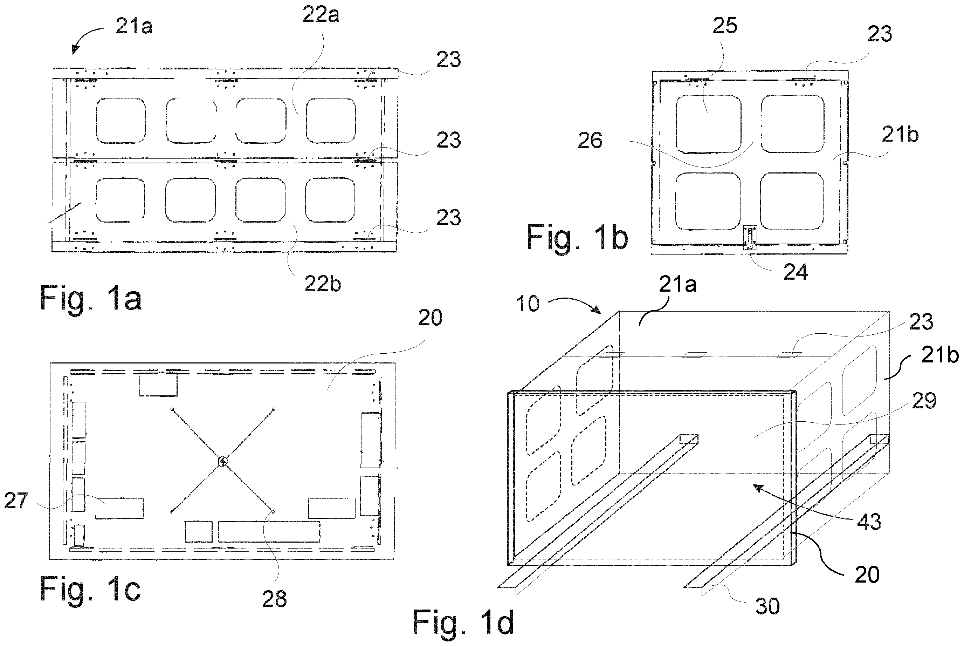

- Fig. 1: eine klappbare Seitenfläche,
- Fig. 1: eine verschwenkbare Seitenfläche,
- Fig. 1c: eine Hauptfläche des Modulkörpers,
- Fig. 1d: einen erfindungsgemäßen Modulkörper in perspektivischer Darstellung,
- Fig. 2: den erfindungsgemäßen Modulkörper in Seitenansicht,
- Fig. 3: eine Ausführungsform einer aus Modulkörpern gebildeten Wand in perspektivischer Darstellung
- Fig. 4a: eine Ausführungsform eines Verbindungsmittels
- Fig. 4b: eine weitere Ausführungsform des Verbindungsmittels, jeweils in Seitenansicht
- Fig. 5a: eine Ausführungsform einer Aufnahme für Präsentationsmittel
- Fig. 5b: eine weitere Ausführungsform einer Aufnahme
- Fig. 5c: eine dritte Ausführungsform der Aufnahme jeweils in der Draufsicht,
- Fig. 6: eine Ausführungsform einer Stützschiene, und
- Fig. 7: eine weitere bevorzugte Ausführungsformeiner erfindungsgemäßen Wand mit angeordneten Displays

Der erfindungsgemäße Modulkörper 10 umfasst neben zwei Hauptflächen 20 zusätzliche Seitenflächen 21 a, b. Fig. 1a zeigt eine derartige Seitenfläche 21a. Es handelt sich hierbei um eine klappbare Seitenfläche 21a, die aus Teilflächen 22a, b gebildet ist. Diese sind über ein Scharnier 23 verbunden. Es bildet sich somit eine klappbare Seitenfläche 21a oder Seitenwand aus.

Die Fig. 1b zeigt eine weitere, im Modulkörper 10 vorgesehene Seitenfläche 21b. Diese ist an einer der Hauptflächen 20 über eine Scharnier 23 angelenkt und im Modulkörper 10 nach Art einer Tür verschwenkbar. Um die Seitenfläche 21b mit den Hauptflächen 20 zu verbinden, weist diese einen Riegel 24 auf, der mit einer Ausnehmung in einer der Hauptflächen 20 in Eingriff bringbar ist und hier eine lösbare Verrastung zwischen Seitenfläche 21b und Hauptfläche 20 gewährleistet.

Die Teilflächen 21a, b weisen Durchbrechungen 25 auf. Diese dienen zum einen dazu, das Gewicht zu reduzieren, zum anderen bilden die zwischen den Durchbrechungen 25 verbleibenden Stege 26 Griffe, die den Aufbau des Modulkörpers 10 wesentlich vereinfachen.

Fig. 1c zeigt die Ausführungsform einer Hauptfläche 20 eines Modulkörpers 10. Dieser weist mehrere Ausbrechungen 27 auf, durch die beispielsweise an der Hauptfläche 20 angeordnete Präsentationsmittel mit der im Inneren des Modulkörpers 10 angeordnete Technik oder Steuerungsmittel verbunden werden können. Die Hauptfläche 20 verfügt zudem über Ausnehmungen 28, durch die Befestigungsmittel für die Präsentationsmittel hindurch geschoben werden können, um mit der Rückseite der Präsentationsmittel in Eingriff gebracht zu werden.

Die Fig. 1d zeigt einen Modulkörper 10 im aufgerichteten Zustand in perspektivischer Darstellung und mit angeordnetem Display 29. Aus der Fig. 1d wird erkennbar, dass der Modulkörper 10 nach Art einer Box ausgebildet ist. Zum Aufrichten und Ausbilden des Modulkörpers 10 wird eine der Hauptflächen 20, beispielsweise die obere Seite nach oben gezogen und richtet dabei die klappbaren Seitenwände 21a auf. Anschließend werden die verschwenkbaren Seitenflächen 21 b als seitliche Wände des Modulkörpers 10 hochgeklappt. Die Seitenflächen 21b rasten dabei in den Hauptflächen 20 ein und stabilisieren den gesamten Modulkörper.

Ein Präsentationsmittel, beispielsweise ein Display 29, Touchscreens oder dergleichen, wird anschließend am Modulkörper 10 eingehängt oder mit der Hauptfläche 20 verschraubt. Dies kann beispielsweise über eine Klemmhebelschraube von der Rückseite der Hauptfläche 20 her erfolgen. Der Modulkörper 10 kann an der Fig. 1d hinteren Seite eine mit der in Fig. 1c dargestellten vorderen Hauptfläche 20 vergleichbare weitere Hauptfläche 20 aufweisen. Daneben besteht auch die Möglichkeit, dass der Modulkörper 10 von der Rückseite her offen ist, das heißt, die zweite Hauptfläche 20 lediglich als Rahmen ausgebildet ist.
Dies bietet den Vorteil, dass der Modulkörper 10 von dieser Seite her zugänglich ist. Desgleichen besteht die Möglichkeit, dass hier an den Seitenflächen 21a, b Schienen oder dergleichen angeordnet sind, so dass in den Modulkörper Racks, beispielsweise für Steuergeräte, Soundanlagen oder dergleichen zur Verfügung gestellt werden, die im Inneren des Modulkörpers 10 untergebracht sind.

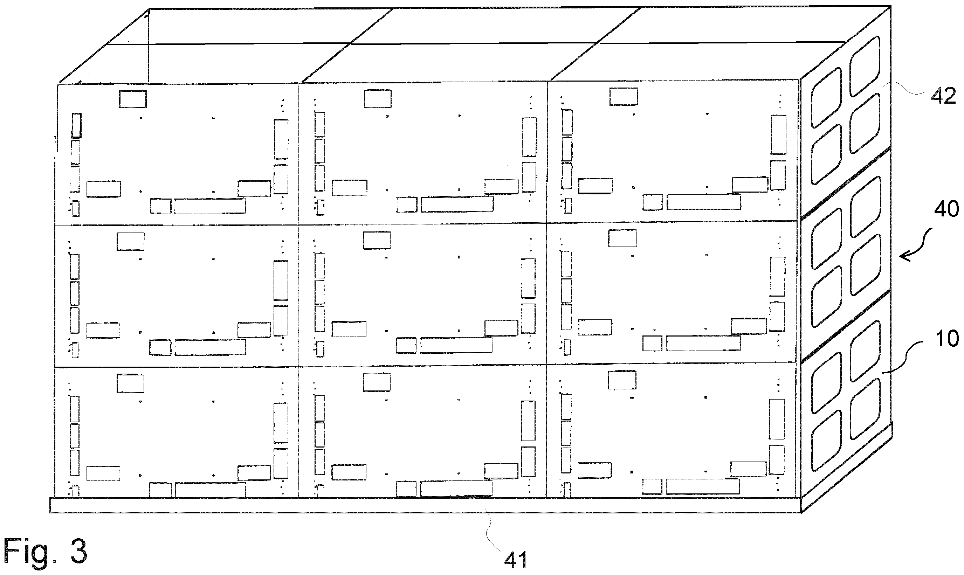

Der in Fig. 1d dargestellte Modulkörper 10 verfügt zusätzlich über eine Stützleiste 30. Diese verbindet die beiden Hauptflächen 20 und überragt den Modulkörper 10 nach vorne. Die Stützleiste 30 dient dazu, die Stabilität des Modulkörpers 10 weiter zu erhöhen, insbesondere dann, wenn mehrere Modulkörper 10 zu einer Wand 40 (vergleiche Fig. 3) kombiniert werden. Die Stützleiste 30 wird an den Hauptflächen 20 beziehungsweise an diesen vorgesehenen Abkantungen (nicht gezeigt) angeschraubt oder in dort vorgesehene Ausnehmungen eingesteckt.

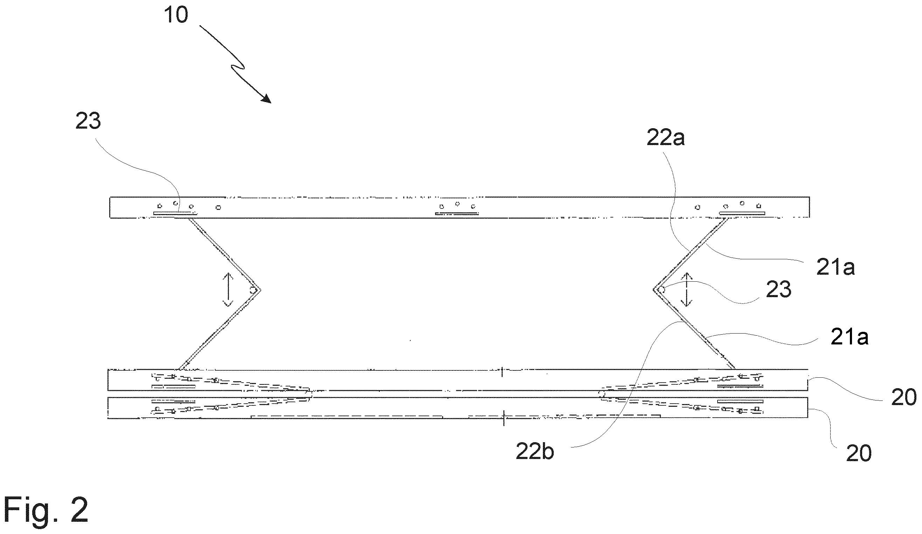

Fig. 2 zeigt den Modulkörper 10 in seitlicher Darstellung. Dargestellt werden nur die klappbaren Seitenflächen 21a. Das zwischen den Teilflächen 22a,b angeordnete Scharnier 23 ermöglicht ein Klappen der Seitenfläche 21a. Im im unteren Teil der Fig. 2 dargestellten teilweise zusammengeklappten Zustand erstrecken sich die Teilflächen 22 a, b noch im Wesentlichen parallel zu den Hauptflächen 20. Nach vollständigem Aufrichten des Modulkörpers 10 sind die Seitenflächen 21a senkrecht zu den Hauptflächen 20 ausgerichtet und definieren den Abstand zwischen den Hauptflächen 20. Das zwischen den Teilflächen 22a,b der Seitenfläche 21a angeordnete Scharnier 23 bewirkt deren Ausbildung nach Art eines Drehgelenks. Im aufgerichteten Zustand des Modulkörpers 10 wird dieser durch die Seitenflächen 21a, b weiter stabilisiert.

In Fig. 2 werden die verschwenkbaren Seitenflächen 21b nicht gezeigt. Diese sind ebenfalls an einer der Hauptflächen 20 angelenkt und können nach oder während des Aufklappens der Seitenfläche 21a zu der der Anlenkung gegenüber liegenden Hauptfläche 20 verschwenkt werden, um mit dieser zu verrasten. Der Modulkörper 10 weist somit einen rechten und linken Klappflügel auf, der drehpunktgelagert ist. An den kurzen Seiten des Modulkörpers 10 sind die Seitenflächen 21b nach Art von Seitentüren angeordnet, die am oberen Ende mit einem Lager versehen sind. Dieses Lager, das nach Art eines Scharniers 23 ausgebildet ist, macht es möglich, die Seitenflächen 21a wie Seitentüren an die Hauptflächen 20 einzuschwenken. Die Hauptflächen können dabei als durchgehende Flächen oder als Rahmen ausgebildet werden. Zusätzlich zu dem in den Seitenflächen 21a mittig angeordneten Scharnieren 23 verfügen diese auch über weitere Scharniere 23, über die die Seitenflächen 21a an den Hauptflächen 20 angeschlossen sind. Der Modulkörper 10 kann somit problemlos von einem zusammengeklappten in den aufgerichteten Zustand verbracht werden. Aufgrund dieser klappbaren Ausführung hat der Modulkörper 10 im zusammengeklappten Zustand sehr wenig Stellfläche beziehungsweise Stautiefe und kann so verschickt oder transportiert werden. Im aufgeklappten beziehungsweise aufgerichteten Zustand wiederum hat der Modulkörper 10 eine sehr große Stellfläche und bildet durch die Eigenstabilität eine selbsttragende Konstruktion aus. Der Zusammenbau des Modulkörpers 10 gestaltet sich einfach und wenig zeitintensiv.

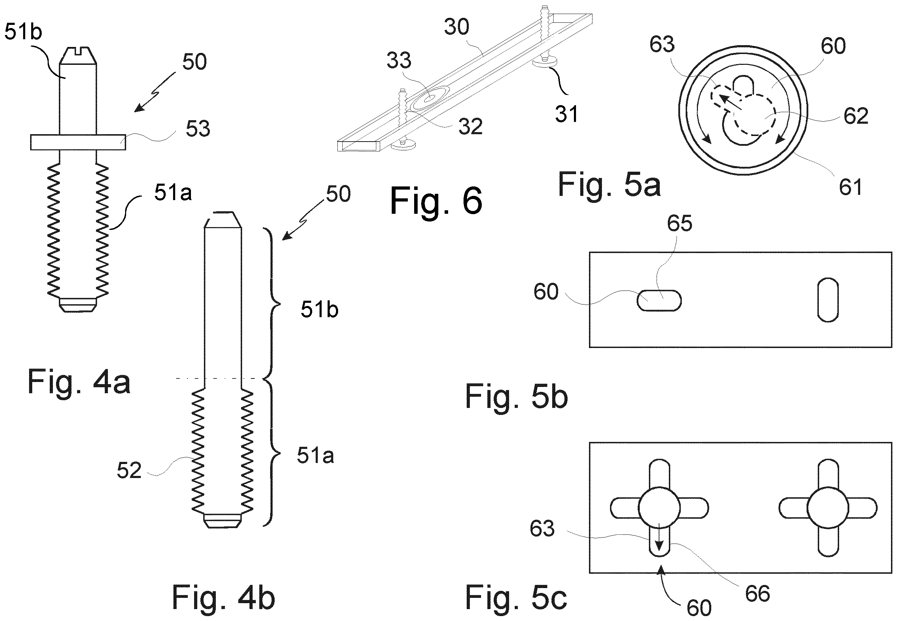

In Fig. 3 ist eine aus Modulkörpern 10 gebildete Wand 40 dargestellt. Diese weist insgesamt 3 x 3 Modulkörper 10 auf. Die Modulkörper 10 sind hierbei im Landscape-format angeordnet, das heißt, mit einer insgesamt horizontalen Ausrichtung der längeren Seite der Hauptfläche 20. Die Modulkörper 10 werden durch geeignete Verbindungsmittel zu der Wand 40 verbunden. Hierbei besteht auch die Möglichkeit, dass Modulkörper 10 in verschiedenen Größen zu einer Wand 40 kombiniert werden. In den einander zugewandten Seitenkanten der Modulkörper 10 weisen Aufnahmen für Verbindungsmittel auf. Es kann sich hierbei beispielsweise um Bohrungen, Gewinde oder dergleichen handeln. In diese werden Steckschrauben 50 (vergleiche Fig. 4 a und 4b) eingesteckt beziehungsweise eingeschraubt.

Neben der in Fig. 3 dargestellten Ausführungsform als Wand 40 besteht selbstverständlich auch die Möglichkeit, dass die Modulkörper 10 als Siegerpodest, Tordurchgang oder ähnliches aufgestellt werden. In Fig. 3 erkennbar ist zudem eine im unteren Bereich der Wand 40 angeordnete Sockelleiste 41. Diese wird über Schrauben oder eine Aufhängung oder dergleichen mit der untersten Reihe der Modulkörper 10 verbunden und stabilisiert die gesamte Wand 40, da durch die Sockelleiste 41 ein Umkippen der Wand 40 wirkungsvoll verhindert werden kann. Die Sockelleiste 41 kann auch als Blende oder dergleichen ausgebildet sein, und bildet dann einen unteren, bodennahen Abschluss der Wand 40. Die Sockelleiste 41 kann sich entlang der gesamten Vorderfläche der Wand 40 erstrecken. Gleichzeitig besteht auch die Möglichkeit, dass sich die Sockelleiste 41 entlang der seitlichen Wangen 42 der Wand 40 erstreckt. Zusätzlich besteht die Möglichkeit, dass die seitlichen Wangen 42 mit einer Blende oder Verkleidung versehen werden, so dass sich die Wand 40 als einheitlicher Körper präsentiert.

Als Verbindungsmittel zwischen den Modulkörpern 10 vorgesehen sind die in den Fig. 4a und 4b dargestellten Steckschrauben 50. Diese verfügen in einem ersten, unteren Teil 51a über ein Gewinde 52. An diesem schließt sich der obere zweite Teil 51b an, der nach Art eines Dorns oder Vorsprungs ausgebildet ist. Während der untere Teil 51a in ein Gewinde oder eine Bohrung in einem ersten Modulkörper 10 eingeschraubt wird, wird der zweite, obere Teil 51b der Steckschraube 50 in eine korrespondierende Ausnehmung an einem zweiten Modulkörper 10 eingesteckt. Diese einfache Steckverbindung ermöglicht den schnellen Auf- und Abbau der Wand 40. In Fig. 4a dargestellt ist eine weitere mögliche Ausführungsform der Steckschraube 50. Diese verfügt zusätzlich über einen Kragen 53, auf dem im zusammengebauten Zustand der zweite Modulkörper 10 aufsitzt. Dadurch, dass die Steckschraube 50, wie in Fig. 4a dargestellt, als Schraube ausgebildet ist, kann durch weitergehendes Einschrauben beziehungsweise Lösen aus dem Gewinde im ersten Modulkörper 10 der Abstand zwischen den Modulkörpern 10 in einfacher Art und Weise angepasst werden. Dies hat den Vorteil, dass hier eine Feinjustierung beziehungsweise Einstellung der Wand 40, beispielsweise bei Verwendung von Präsentationsmitteln mit unterschiedlichem Format, reagiert werden kann. Die in der Fig. 4a dargestellte Ausführungsform der Steckschraube 50, die als Verbindungsmittel zwischen den Modulkörpern 10 in einer wie beispielsweise in Fig. 3 dargestellten Wand 40 dient, verbessert die Wand 40 weiter, da hier eine Justiervorrichtung zur Verfügung gestellt wird.

Fig. 5a zeigt eine mögliche Ausführungsform einer Ausnehmung 60 für die Aufnahme des Präsentationsmittels. In Fig. 5a dargestellt ist eine, in einer drehbaren Hülse 61 vorgesehene Ausnehmung 60. Diese ist zudem als Schlüsselloch 62 ausgebildet. Aufgrund der drehbaren Anordnung der Hülse 61 kann hier auf verschiedene Ausrichtungen des Modulkörpers 10 reagiert werden. Das Präsentationsmittel, das an dem Modulkörper 10 angeordnet werden soll, verfügt in der Regel über Vorsprünge oder Aufhängungen, die in die Aufnahme 60 eingesetzt werden. Nach Einsetzen rutscht dieser Vorsprung in den verlängerten Teil 63 des Schlüssellochs 62 und verhindert somit ein seitliches Verrutschen des Präsentationsmittels. Zur Entnahme wird das Präsentationsmittel angehoben und bei Erreichen des oberen Teils 64 des Schlüssellochs 62 aus der Ausnehmung 60 entnommen. Fig. 5b zeigt eine weitere, einfachere Ausführung der Ausnehmung 60. Diese ist als Langloch 65 ausgeführt. Es besteht hierbei die Möglichkeit, das Langloch 65 horizontal oder vertikal in der Hauptfläche 20 des Modulkörpers 10 anzuordnen. In das Langloch 65 werden Vorsprünge am Präsentationsmittel eingeführt beziehungsweise wird durch das Langloch 65 eine Schraube von hinten her in das Präsentationsmittel eingedreht und dieses dann mit der Hauptfläche 20 verspannt. Eine weitere, etwas aufwendigere Ausführungsform der Ausnehmung 60 ist in Fig. 5c dargestellt. Die Ausnehmung ist hier als Kreuzloch 66 ausgeführt. In dessen mittleren Bereich kann eine Aufhängung oder ein Vorsprung eingeführt werden, um das Präsentationsmittel anschließend in den verlängerten Teil 63 des Kreuzloches 66 einzusenken. Es bildet sich so eine stabile Aufhängung für das Präsentationsmittel aus. Wird der Modulkörper 10 um 90° gedreht aufgestellt, so kann der nächste verlängerte Teil 63 des Kreuzloches 66 zum Einhängen verwendet werden. Die in Fig. 5c dargestellte Ausführungsform der Ausnehmung verbessert somit die variable Aufstellung des Modulkörpers 10 und ermöglicht es, in einfacher Art und Weise die Aufhängung der Präsentationsmittel entsprechend anzupassen. Selbstverständlich besteht hier auch die Möglichkeit, dass durch den mittleren Teil der Ausnehmung 60 eine Schraube, beispielsweise eine Klemmhebelschraube, geführt und in das Präsentationsmittel eingeschraubt wird. Nach teilweisem Einschrauben kann dann das Präsentationsmittel in den verlängerten Teil 63 der Ausnehmung 60 eingehängt werden und ist damit gegen Verrutschen gesichert.

Fig. 6 zeigt eine Stützleiste 30. Diese kann an den Modulkörper 10 angeschraubt oder in entsprechende Ausnehmungen eingesteckt werden und verbessert die Stabilität der gesamten Wand 40 weiter. An der Stützleiste 30 angeordnet befindet sich ein Stützfuß 31 mit Fußschraube 32. Dieser ermöglicht eine Höhenverstellbarkeit des Modulkörpers 10, wodurch Unebenheiten der Aufstellplattform für den Modulkörper 10 ausgeglichen werden können. Die Fußschraube 32 wird hierzu gedreht und dar über die gewünschte Höhe eingestellt. Zusätzlich zu den Fußschrauben 32 verfügt die Stützleiste 30 über eine Dosenlibelle 33, über die Positionierung des Modulkörpers 10 überprüft und weiter justiert werden kann. Die Stützleiste 30 wird bevorzugt über Schrauben mit den Modulkörpern 10 verbunden. Diese weisen hierzu entsprechende Bohrungen in ihren Seitenflächen 21a,b, der Hauptfläche 20 oder in der an den Seitenflächen 21a,b vorgesehenen Abkantungen oder Bördelungen auf. Die Stützleiste 30 überragt den Modulkörper 10 und bietet somit die ausreichende Stabilität gegen Verkippen. Es besteht die Möglichkeit, dass Stützleiste 30 und Sockelleiste 41 kombiniert an einem Modulkörper 10 angeordnet werden, wobei die Sockelleiste 41 ein Verkippen nach vorne und die Stützleiste 30 ein Verkippen der Wand 40 nach hinten verhindert.

Zusätzlich kann die Fußschraube 32 beziehungsweise der Stützfuß 31 gegen eine Rolle getauscht werden. Die Stützleiste 30 dient dann dazu, den Modulkörper 10 zu transportieren. Alternativ hierzu kann ein Transportwagen (nicht dargestellt) zur Verfügung gestellt werden. Mit diesem Transportwagen können die Modulkörper 10 im zusammengeklappten Zustand leichter transportiert werden. Die Modulkörper 10 können hierzu ohne weiteres aufeinander gestapelt werden und weisen an den Hauptflächen 20 angeordnete Vorsprünge, Stifte oder einsetzbare Bolzen, bspw. Hutmuttern auf. Diese greifen in an dem Transportwagen vorgesehene Löcher ein und verhindern somit ein Verrutschen der Modulkörper 10 auf dem Wagen. Zusätzlich besteht die Möglichkeit, dass die Modulkörper 10 auf dem Transportwagen durch Gurte oder dergleichen gesichert werden. Der Transportwagen weist hierzu bevorzugt Zurrpunkte oder dergleichen auf.

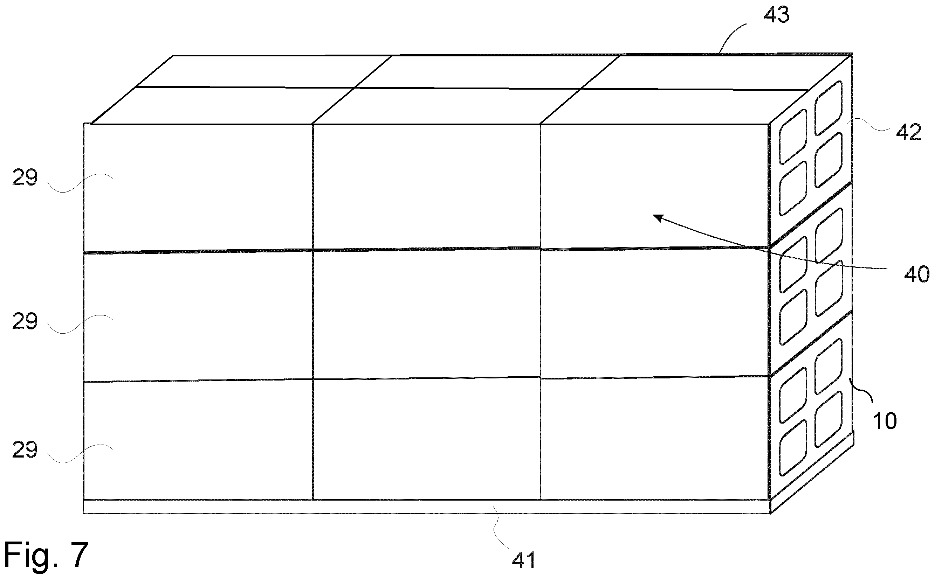

In Fig. 7 ist eine weitere Ausführungsform einer aus 3 x 3 Modulkörpern 10 gebildeten Wand 40 dargestellt. Die Modulkörper 10 sind im Landscapeformat angeordnet und durch geeignete Verbindungsmittel zu einer Wand 40 verbunden. Den unteren Abschluss der Wand 40 bildet die Sockelleiste 41, die seitlichen Wangen 42 der Wand 40 sind im Ausführungsbeispiel offen gehalten. An den Hauptflächen 20 der Modulkörper 10 sind im Ausführungsbeispiel Displays 29 eingehängt, sodass eine Video- bzw. Videosplitwand gebildet wird. Die Steuerungs- und Videotechnik, ebenso wie ein Soundanlage und Lautsprecher sind im Innern der Modulkörper 10 bzw. in dem von diesen umschlossenen Raum 43 angeordnet. Die einander zugewandten Seitenkanten der Modulkörper 10 sind über geeignete Verbindungsmittel verbunden.

**Bezugszeichen**

| | | | |
|---|---|---|---|
| 10 | = Modulkörper | 23 | = Scharnier |
| | | 24 | = Riegel |
| 20 | = Hauptflächen | 25 | = Durchbrechung |
| 21a,b | = Seitenfläche | 26 | = Steg |
| 22a,b | = Teilfläche | 27 | = Ausbrechung |
| 28 | = Ausnehmung | | |
| 29 | = Display | | |
| | | | |
| 30 | = Stützleiste | | |
| 31 | = Stützfuß | | |
| 32 | = Fußschraube | | |
| 33 | = Dosenlibelle | | |
| | | | |
| 40 | = Wand | | |
| 41 | = Sockelleiste | | |
| 42 | = Wange | | |
| 43 | = Raum | | |
| | | | |
| 50 | = Steckschraube. | | |
| 51a,b | = Teil | | |
| 52 | = Gewinde | | |
| 53 | = Kragen | | |
| | | | |
| 60 | = Ausnehmung | | |
| 61 | = Hülse | | |
| 62 | = Schlüsselloch | | |
| 63 | = verlängerter Teil | | |
| 64 | = oberer Teil | | |
| 65 | = Langloch | | |
| 66 | = Kreuzloch | | |

## Patentansprüche

1. Zusammenklappbarer Modulkörper (10) zur Anordnung von Präsentationsmitteln, umfassend
- eine erste als durchgehende Fläche ausgebildete Hauptfläche (20) zur Anordnung von Präsentationsmitteln,
- eine zweite, zu der ersten parallel angeordnete als durchgehende Fläche ausgebildete Hauptfläche (20) zur Anordnung von Präsentationsmitteln,
- zwei, die Hauptflächen (20) verbindende, klappbare Seitenflächen (21a), und
- zwei an zumindest einer der Hauptflächen (20) angeschlossene, verschwenkbare Seitenflächen (21b),
wobei die Seitenflächen (21a, b) in zusammengeklapptem Zustand im Wesentlichen parallel und in einem aufgerichteten Zustand im Wesentlichen senkrecht zu den Hauptflächen (20) ausrichtbar sind, und an den Hauptflächen (20) eine sich senkrecht zur Hauptfläche (20) erstreckende umlaufende Abkantung oder Bördelung vorgesehen ist, wobei die Abkantung oder Bördelung im aufgerichteten Zustand des Modulkörpers (10) als Stand- oder Auflagefläche des Modulkörpers (10) vorgesehen ist und in den Abkantungen oder Bördelungen wenigstens eine Aufnahme für ein Verbindungsmittel zum Ausbilden einer Verbindung von zwei oder mehr Modulkörpern (10) vorgesehen ist,
**dadurch gekennzeichnet, dass** wenigstens eine der Hauptflächen (20) Ausbrechungen (27) zum Innern des Modulkörpers (10) hin aufweist und die Seitenflächen (21a, b) rahmenartig ausgebildet sind oder rahmenartige Durchbrechungen (25) aufweisen und in den Hauptflächen (20) Ausnehmungen (60) zum Einhängen von an den Präsentationsmitteln angeordneten Vorsprüngen oder Halterungen oder zum Durchstecken von mit den Präsentationsmitteln in Eingriff bringbaren Schrauben vorgesehen sind.

2. Zusammenklappbarer Modulkörper (10) nach Anspruch 1, **dadurch gekennzeichnet, dass** die klappbare Seitenfläche (21a) aus über ein Scharnier (23) verbundenen Teilflächen (22a, b) gebildet ist, wobei die Teilflächen (22a, b) randseitige Abkantungen aufweisen, und die Abkantungen aneinander liegender Seiten der Teilflächen (22a, b) einen von 90° abweichenden Winkel aufweisen.

3. Zusammenklappbarer Modulkörper (10) nach einem der vorhergehenden Ansprüche, **dadurch gekennzeichnet, dass** an den Seitenflächen (21a, b) randseitige Abkantungen vorgesehen sind, wobei die Abkantungen einer ersten Seitenfläche (21a, b) zumindest abschnittsweise Hinterschneidungen zum Eingriff mit Abkantungen einer zweiten Seitenfläche (21a, b) aufweisen und an den Abkantungen einer ersten Seitenfläche (21a, b) Rastnasen zum Übergreifen der Abkantungen einer zweiten Seitenfläche (21a, b) vorgesehen sind oder in den Abkantungen einer ersten Seitenfläche (21a, b) schlitzförmige Ausnehmungen zur Aufnahme von Vorsprüngen an den Abkantungen einer zweiten Seitenfläche (21a, b) vorgesehen sind.

4. Zusammenklappbarer Modulkörper (10) nach einem der vorhergehenden Ansprüche, **dadurch gekennzeichnet, dass** die verschwenkbare Seitenfläche (21a) Rastmittel zum Festlegen der verschwenkbaren Seitenfläche (21a) an oder in der Hauptfläche (20) im aufgerichteten Zustand aufweist, wobei die Rastmittel als federbeaufschlagter Riegel (24), als Raste, als Klinke, Schnellspanner oder lösbare Verschraubung ausgebildet sind.

5. Zusammenklappbarer Modulkörper (10) nach einem der vorhergehenden Ansprüche, **dadurch gekennzeichnet, dass** ein an wenigstens einer Hauptfläche (20) oder den Seitenflächen (21a, b) anordenbarer Sockel, Stützvorsprung oder eine Sockelleiste (41) vorgesehen ist, wobei sich der Sockel, der Stützvorsprung oder die Sockelleiste (41) senkrecht von der Hauptfläche (20) oder der Seitenfläche (21a, b) weg erstreckend, parallel zu einer Stand- oder Auflagefläche des Modulkörpers (10) anordenbar ist oder wenigstens eine die Hauptflächen (20) verbindende, insbesondere die Hauptflächen (20) in wenigstens eine Richtung überragende Stützleiste (30) oder -schiene vorgesehen ist, wobei in den Hauptflächen (20) oder den Seitenflächen (21a, b) oder der Abkantung oder Bördelung wenigstens eine Aufnahme, insbesondere eine Bohrung oder ein Innengewinde zur lösbaren Anbringung der Stützleiste (30) oder -schiene vorgesehen ist.

6. Zusammenklappbarer Modulkörper (10) nach Anspruch 5, **dadurch gekennzeichnet, dass,** in oder an den Hauptflächen (20) oder den Seitenflächen (21a, b) oder der Abkantung oder Bördelung oder in der Stützleiste (30) oder -schiene eine, als längenverstellbare Schraube (32) oder höhenverstellbarer Stand- oder Stützfuß (32) ausgebildete Justiervorrichtung für den Modulkörper (10) vorgesehen ist oder in oder an den Hauptflächen (20) oder den Seitenflächen (21a, b), den Abkantungen, Bördelungen oder in der Stützleiste (30) oder -schiene wenigstens eine Libelle, insbesondere eine Dosenlibelle (33) angeordnet ist oder die Stützleiste (30) oder -schiene längenverstellbar, insbesondere als Teleskopschiene ausgebildet ist.

7. Zusammenklappbarer Modulkörper (10) nach einem der vorhergehenden Ansprüche, **dadurch gekennzeichnet, dass** der Modulkörper (10) horizontal oder vertikal, insbesondere im Portrait- oder Landscapeformat ausgerichtet aufstellbar ist und zwischen den Hauptflächen (20) verlaufende und/oder an den die Hauptflächen (20) verbindenden Seitenflächen (21a, b) angeordnete Schienen zum Einschub von Fächern, Laden, Geräte-, Einschubracks, insbesondere 19"- Racks oder dergleichen vorgesehen sind oder der Modulkörper (20) oder die Hauptflächen (20) bzw. Seitenflächen (21a, b) ganz oder teilweise aus Metall, insbesondere Stahl oder Aluminium, Kunststoff, faserverstärktem Kunststoff, Holz, Holzwerkstoffen, GFK, CFK oder Verbundmaterialien gebildet ist und als Präsentationsmittel Bildschirme, Touchscreens, LCD- oder Plasmabildschirme, LED-Flächen, Displays (29), Projektions- oder Präsentationsflächen vorgesehen sind.

8. Zusammenklappbarer Modulkörper (10) nach einem der vorhergehenden Ansprüche, **dadurch gekennzeichnet, dass** in den Ausnehmungen (60) in der Hauptfläche (20) drehbar gelagerte Hülsen (61) oder Scheiben angeordnet sind oder die Ausnehmungen (60) als Bohrung, Langloch (65), Kreuzloch oder Schlüsselloch (62) ausgebildet sind.

9. Wand (40) gebildet aus lösbar verbundenen zusammenklappbaren Modulkörpern (10) gemäß einem der Ansprüche 1 bis 8.

10. Wand (40) nach Anspruch 9, **dadurch gekennzeichnet, dass** die Modulkörper (10) über in seitlichen Abkantungen oder Bördelungen der Hauptflächen (20) vorgesehene Steck-, Schraub- oder Rastmittel (50) lösbar fest verbunden sind, wobei der Abstand zwischen den Modulkörpern (10), über eine Stell- oder Steckschraube (50) einstellbar ist.

11. Wand (40) nach Anspruch 9 oder 10, **dadurch gekennzeichnet, dass** wenigstens an den eine Stand- oder Auflagefläche der Wand (40) aufweisenden Modulkörpern (10) ein Stützsockel, Sockelleiste (41) oder eine Stützblende oder -leiste (30) lösbar angeordnet ist, wobei an der Stand- oder Auflagefläche eine insbesondere längen- und höhenverstellbare Stützleiste (30) angeordnet ist.

12. Wand (40) nach einem der Ansprüche 9 bis 11, **dadurch gekennzeichnet, dass** die Modulkörper (10) unterschiedliche Flächengrößen oder Volumina aufweisen oder die Modulkörper (10) wahlweise horizontal oder vertikal ausgerichtete Hauptflächen (20) oder Kombinationen daraus aufweisen oder die Wand (40) als Bogen, Portal, Podest, Band, Tunnel, Turm, Sockel, Rechteck oder Quader ausgebildet ist.

13. Wand (40) nach einem der Ansprüche 9 bis 12, **dadurch gekennzeichnet, dass** an den Modulkörper (10) Präsentationsmittel, insbesondere Bildschirme, Touchscreens, LCD- oder Plasmabildschirme, Displays (29), LED-Flächen oder Projektions- oder Präsentationsflächen oder Kombinationen daraus angeordnet sind, wobei die Präsentationsmittel an den Modulkörpern (10) beidseitig anordenbar sind und eine rückseitige Verschraubung oder Einhängung der Präsentationsmitteln in den Modulkörpern (10) bzw. der Wand (40) vorgesehen ist.

14. Wand (40) nach einem der Ansprüche 9 bis 13, **dadurch gekennzeichnet, dass** der zwischen den Hauptflächen (20) der aufgerichteten Modulkörper (10) aufgespannte Raum (43) als Aufnahme- oder Lagerraum, insbesondere für Steuer- bzw. Versorgungsvorrichtungen für die Präsentationsmittel, für Soundanlagen oder für Fächer, Laden, Geräte-, Einschubracks, insbesondere 19"-Racks oder dergleichen vorgesehen ist.

## Claims

1. Collapsible module body (10) for the arrangement of presentation means, comprising
- a first main surface (20) designed as a continuous surface for the arrangement of presentation means,
- a second main surface arranged parallel to the first as a continuous surface (20) for the arrangement of presentation means,
- two foldable side surfaces (21a) connecting the main surfaces (20), and
- two pivotable side faces connected to at least one of the main surfaces (20) (21b),
wherein the side surfaces (21a, b) in the folded state are substantially parallel and in in an upright position are substantially perpendicular to the main surfaces (20), and at the main surfaces (20) a peripheral edging or flanging is provided, whereby the edging or flanging in the upright position of the module body (10) is provided as a standing or supporting surface of the module body (10), and in the edgings or flanges at least one receptacle for a connecting means for forming a connection of two or more module bodies (10) is provided, **characterized in that** at least one of the main surfaces (20) has break-outs (27) towards the interior of the module body (10) and **in that** the side surfaces (21a, b) are of frame-like construction or have frame-like apertures (25) and with the main surfaces (20) having recesses (60) for hanging projections or holders arranged on the presentation means or for inserting screws that can be engaged with the presentation means.

2. Collapsible module body (10) according to claim 1, **characterized in that** the hinged side surface (21a) is formed by partial surfaces (22a, b) connected by a hinge (23), with the partial surfaces (22a, b) having edge-sided chamfers, and the chamfers of adjacent sides of the partial surfaces (22a, b) have an angle deviating from 90°.

3. Collapsible module body (10) according to one of the preceding claims, **characterized in that** the side surfaces (21a, b) are provided with chamfers at the edges, wherein the chamfers of a first side surface (21a, b) have at least in sections undercuts for engagement with chamfers of a second side surface (21a, b) with latching lugs provided on the chamfers of a first side surface (21a, b) for overlapping the chamfers of a second side surface (21a, b) and wherein in the chamfers of a first side surface (21a, b) have slot-shaped recesses for accommodating projections provided on the chamfers of a second side surface (21a, b).

4. Collapsible module body (10) according to one of the preceding claims, **characterised in that** the pivotable side surface (21a) is provided with detent means for fixing the pivotable side surface (21a) on or in the main surface (20) in the upright state, wherein the detent means are configured as spring-loaded bolt (24), as a catch, as a latch, as a quick-release or detachable screw connection.

5. Collapsible module body (10) according to one of the preceding claims, **characterized in that** on at least one main surface (20) or the side surfaces (21a, b) a skirting (41) a support projection or a skirting board is provided, wherein the skirting (41), the support projection or the skirting board can be arranged extending away perpendicular from the main surface (20) or the side surfaces (21a, b), parallel to a standing or supporting surface of the module body (10), or **in that** at least one support strip (30) or rail projecting connecting the main surface (20) and extending over the main surfaces (20) in at least one direction is provided, wherein in the main surfaces (20) or the side surfaces (21a, b) or the chamfer or flanging at least one receptacle, in particular a bore or an internal thread for detachably fixing the support strip (30) or rail is provided.

6. Collapsible module body (10) according to claim 5, **characterized in that,** in or on the main surfaces (20) or the side surfaces (21a, b) or the edging or flanging, or in the support strip (30) or rail, an aligner configured as a screw (32), which can be adjusted in length or height or a stand or support base (32) which can be adjusted in height for the module body (10) is provided or **in that** in or on the main surfaces (20) or the side surfaces (21a, b), the chamfers, flanges or the support strip (30) or rail at least one bubble tube, in particular a circular spirit level is provided or **in that** the support strip (30) or rail is configured length-adjustable, in particular as a telescopic rail.

7. Collapsible module body (10) according to one of the preceding claims, **characterized in that** the module body (10) can be positioned horizontally or vertically, in particular arranged in the portrait or landscape format with rails arranged between the main surfaces (20) and/or on the side surfaces (21a, b) connecting the main surfaces (20) for inserting compartments, drawers, equipment racks, slide-in racks, especially 19" racks or the like being provided or **in that** the module body (20) or the main surfaces (20) or side surfaces (21a, b) being completely or partly made of metal, especially steel or aluminium, plastic, fibre-reinforced plastic, wood, wood-based materials, GRP, CFRP or composite materials and wherein as presentation means, screens, touch screens, LCD or plasma screens, LED panels, displays (29), projection or presentation areas are provided.

8. Collapsible module body (10) according to one of the preceding claims, **characterized in that** sleeves (61) or washers rotatably mounted are arranged in the recesses (60) in the main surface (20) or **in that** the recesses (60) are configured as a bore, slotted hole (65), cross hole or keyhole (62).

9. Wall (40) formed by detachably connected collapsible module bodies (10) according to any of claims 1 to 8.

10. Wall (40) according to claim 9, **characterized in that** the module bodies (10) are connected detachably via plug-in, screwing or locking means (50) provided in the lateral edges or flanges of the main surfaces (20) wherein the distance between the module bodies (10) can be adjusted by means of an adjusting or plug-in screw (50).

11. Wall (40) according to claim 9 or 10, **characterized in that** at least one of the module bodies (10) having a standing or support surface of the wall (40) a support base, skirting board (41) or a support panel or strip (30) is releasably arranged, wherein at the standing or support surface a support panel or strip (30), in particular a support strip (30) adjustable in length and height is arranged.

12. Wall (40) according to one of claims 9 to 11, **characterized in that** the module bodies (10) have different surface sizes or volumes or **in that** the module bodies (10) can optionally have horizontally or vertically aligned main surfaces (20) or combinations thereof, or **in that** the wall (40) is designed as an arch, portal, platform, band, tunnel, tower, base, rectangle or cuboid.

13. Wall (40) according to one of claims 9 to 12, **characterized in that** on the module body (10) presentation means, in particular screens, touch screens, LCD or plasma screens, displays (29), LED screens or projection or presentation screens or combinations thereof are arranged wherein the presentation means can be arranged on both sides of the module bodies (10) and a screw connection or suspension of the presentation devices is provided on the back of the module bodies (10) or the wall (40).

14. Wall (40) according to any one of claims 9 to 13, **characterized in that** the space (43) spanning the main surfaces (20) of the upright module bodies (10) serves as a receiving or storage room, in particular for control or supply devices for the presentation means, for sound systems or for compartments, drawers, equipment racks, slide-in racks, especially 19" racks or the like.

## Revendications

1. Corps de module pliable (10) pour l'agencement de moyens de présentation, comprenant
- une première surface principale (20) conçue comme une surface continue pour l'agencement des moyens de présentation,
- une deuxième surface principale disposée parallèlement à la première en tant que surface continue (20) pour l'agencement des moyens de présentation,
- deux surfaces latérales pliables (21a) reliant les surfaces principales (20), et
- deux surfaces latérales pivotantes reliées à au moins l'une des surfaces principales (20),
dans lequel les surfaces latérales (21a, b) dans l'état plié sont essentiellement parallèles et dans une position verticale sont essentiellement perpendiculaires aux surfaces principales (20), et sur les surfaces principales (20) une bordure ou un bord périphérique est prévu, la bordure ou le bord périphérique dans la position verticale du corps de module (10) est prévu comme surface de support ou debout du corps de module (10), et dans les bords ou rebords au moins un réceptacle pour un moyen de connexion pour former une connexion de deux corps de module (10) ou plus sont prévus, **caractérisé en ce que** au moins l'une des surfaces principales (20) comporte des évidements (27) vers l'intérieur du corps de module (10) et **en ce que** les surfaces latérales (21a, b) sont de construction en forme de cadre ou comportent des ouvertures en forme de cadre (25) et les surfaces principales (20) comportent des évidements (60) pour des saillies suspendues ou des supports disposés sur les moyens de présentation ou pour insérer des vis qui peuvent être engagées avec le moyens de présentation.

2. Corps de module pliable (10) selon la revendication 1, **caractérisé en ce que** la surface latérale articulée (21a) est formée par des surfaces partielles (22a, b) reliées par une charnière (23), avec les surfaces partielles (22a, b) ayant des chanfreins à bords latéraux, et les chanfreins des côtés adjacents des surfaces partielles (22a, b) ont un angle déviant de 90 °.

3. Corps de module pliable (10) selon l'une des revendications précédentes, **caractérisé en ce que** les surfaces latérales (21a, b) sont munies de chanfreins sur les bords, les chanfreins d'une première surface latérale (21a, b) étant à au moins dans des sections de contre-dépouille pour engagement avec des chanfreins d'une seconde surface latérale (21a, b) avec des ergots d'encliquetage prévus sur les chanfreins d'une première surface latérale (21a, b) pour chevaucher les chanfreins d'une seconde surface latérale (21a, b) et dans lequel les chanfreins d'une première surface latérale (21a, b) présentent des évidements en forme de fentes pour recevoir des saillies prévues sur les chanfreins d'une seconde surface latérale (21a, b).

4. Corps de module pliable (10) selon l'une des revendications précédentes, **caractérisé en ce que** la surface latérale pivotante (21a) est munie de moyens d'encliquetage pour fixer la surface latérale pivotante (21a) sur ou dans la surface principale (20) l'état vertical, dans lequel les moyens d'encliquetage sont configurés en tant que boulon à ressort (24), en tant que verrou, en tant que verrou, en tant que raccord à vis à libération rapide ou détachable.

5. Corps de module pliable (10) selon l'une des revendications précédentes, **caractérisé en ce que** sur au moins une surface principale (20) ou les surfaces latérales (21a, b) une plinthe (41) une saillie de support ou une plinthe est pourvu que la jupe (41), la saillie de support ou la plinthe puissent être disposées perpendiculairement à la surface principale (20) ou aux surfaces latérales (21a, b), parallèlement à une surface de support ou debout du corps de module (10) ou **en ce qu** 'au moins une bande de support (30) ou un rail faisant saillie reliant la surface principale (20) et s'étendant sur les surfaces principales (20) dans au moins une direction est prévue, dans les surfaces principales (20) ou les surfaces latérales (21a, b) ou le chanfrein ou le bridage d'au moins un récipient, en particulier un alésage ou un filetage interne pour la fixation amovible de la bande de support (30) ou du rail.

6. Corps de module pliable (10) selon la revendication 5, **caractérisé en ce que,** dans ou sur les surfaces principales (20) ou les surfaces latérales (21a, b) ou les bordures ou les rebords, ou dans la bande de support (30) ) ou un rail, un aligneur configuré comme une vis (32), réglable en longueur ou en hauteur, ou un support ou une base de support (32) réglable en hauteur pour le corps de module (10) est prévu ou ou sur les surfaces principales (20) ou latérales (21a, b), les chanfreins, brides ou la bande de support (30) ou le rail au moins un tube à bulles, notamment un niveau à bulle circulaire ou en ce que le support la bande (30) ou le rail est configuré en longueur réglable, en particulier en tant que rail télescopique.

7. Corps de module pliable (10) selon l'une des revendications précédentes, **caractérisé en ce que** le corps de module (10) peut être positionné horizontalement ou verticalement, en particulier en format portrait ou paysage avec des rails disposés entre les surfaces principales (20) et / ou sur les surfaces latérales (21a, b) reliant les surfaces principales (20) pour insérer des compartiments, des tiroirs, des racks d'équipement, des racks coulissants, notamment des racks de 19 "ou similaire ou les surfaces principales (20) ou latérales (21a, b) étant entièrement ou partiellement en métal, notamment en acier ou en aluminium, en matière plastique, en matière plastique renforcée de fibres, bois, matériaux dérivés du bois, PRV, PRFC ou matériaux composites et dans lequel des moyens de présentation, des écrans, des écrans tactiles, des écrans LCD ou plasma, des panneaux LED, des affichages (29), des zones de projection ou de présentation sont prévus.

8. Corps de module pliable (10) selon l'une des revendications précédentes, **caractérisé en ce que** des manchons (61) ou rondelles montés rotatifs sont disposés dans les évidements (60) de la surface principale (20) ou **en ce que** les évidements (60) sont configurés comme un alésage, un trou oblong (65), un trou transversal ou un trou de serrure (62).

9. Paroi (40) formée par des corps modulaires démontables (10) reliés de manière détachable selon l'une quelconque des revendications 1 à 8.

10. Paroi (40) selon la revendication 9, **caractérisée en ce que** les corps de module (10) sont raccordables de manière détachable par l'intermédiaire de moyens d'enfichage, de vissage ou de verrouillage (50) ménagés dans les bords latéraux ou brides des surfaces principales (20) dans lequel la distance entre les corps de module (10) peut être réglée au moyen d'une vis de réglage ou d'enfichage (50).

11. Paroi (40) selon la revendication 9 ou 10, **caractérisée en ce que** au moins l'un des corps de module (10) comporte une surface de support ou de support de la paroi (40), une base de support, une plinthe (41) ou un support un panneau ou une bande (30) est agencé de manière amovible, dans lequel un panneau ou une bande de support (30), en particulier une bande de support (30) réglable en longueur et en hauteur, est disposé sur la surface debout ou de support.

12. Paroi (40) selon l'une des revendications 9 à 11, **caractérisée en ce que** les corps de module (10) ont des tailles ou volumes de surface différents ou **en ce que** les corps de module (10) peuvent éventuellement comporter des surfaces principales alignées horizontalement ou verticalement.) ou des combinaisons de ceux-ci, ou **en ce que** la paroi (40) est conçue comme une arche, un portail, une plate-forme, une bande, un tunnel, une tour, une base, un rectangle ou un cuboïde.

13. Paroi (40) selon l'une des revendications 9 à 12, **caractérisée en ce que** sur le corps de module (10) des moyens de présentation, notamment des écrans, des écrans tactiles, des écrans LCD ou plasma, des écrans (29), des écrans LED ou des écrans de présentation ou leurs combinaisons sont disposés dans lesquels les moyens de présentation peuvent être disposés des deux côtés des corps de module (10) et une connexion à vis ou une suspension des dispositifs de présentation est prévue à l'arrière des corps de module (10) ou de la paroi (40).

14. Paroi (40) selon l'une quelconque des revendications 9 à 13, **caractérisée en ce que** l'espace (43) enjambant les surfaces principales (20) des corps de modules verticaux (10) sert de salle de réception ou de stockage, notamment pour des dispositifs de commande ou d'alimentation pour les moyens de présentation, pour les systèmes de sonorisation ou pour les compartiments, les tiroirs, les râteliers d'équipement, les râteliers à glissières, en particulier les racks 19 "ou similaires.
